# EUROPÄISCHE PATENTSCHRIFT

(11) **EP 0 476 432 B1**
(45) Veröffentlichungstag und Bekanntmachung des Hinweises auf die Patenterteilung: **20.08.1997**
(21) Anmeldenummer: 91114935.9
(22) Anmeldetag: 04.09.1991
(51) Int. Cl.: C08F 10/02, C08F 4/655

(54) **Verfahren zur Herstellung von Ethylen(co-)polymeren**
Process for preparing ethylene (co)polymers
Procédé de préparation de (co)polymères d'éthylène

(30) Priorität: 06.09.1990 DE 4028294; 06.09.1990 DE 4028293
(43) Veröffentlichungstag der Anmeldung: 25.03.1992
(73) Patentinhaber: HOECHST AKTIENGESELLSCHAFT, 65926 Frankfurt am Main (DE)
(72) Erfinder: Heinrich, Andreas, Dr., D-6238 Hofheim am Taunus (DE)

(56) Entgegenhaltungen:
- EP-A- 0 319 173
- EP-A- 0 398 167
- FR-A- 2 107 179
- FR-A- 2 320 312
- GB-A- 2 015 548
- US-A- 4 356 111

## Beschreibung

Die Erfindung betrifft ein Verfahren zur (Co-)polymerisation von Ethylen zu grobkörnigen Polymerpartikeln mit enger Korngrößenverteilung, hoher Schüttdichte und breiter Molmassenverteilung durch Einsatz eines Katalysators, dessen Trägerkomponente durch Umsetzung einer Titan(III)-verbindung mit gelöstem Magnesiumalkoholat erhalten wird.

Das Verfahren zur Herstellung der erfindungsgemäß zu verwendenden Titan(III)-verbindungen ist bekannt (vgl. US-PS 3,773,735). Der dort beschriebene Katalysator, der aus der genannten Titan(III)-verbindung und einem Aluminiumtrialkyl besteht, liefert bei der Polymerisation ein Polyolefin mit relativ kleinem Korn. Die Katalysatoraktivität ist unbefriedigend.

Es wurde bereits ein Katalysator zur Polymerisation von Olefinen vorgeschlagen, der aus einem Aluminiumtrialkyl und dem Gesamtprodukt aus der Reaktion eines in einem inerten Lösemittel gelösten Magnesiumalkoholats mit einer vierwertigen Titanverbindung und einer aluminiumorganischen Verbindung besteht. Die Verwendung dieses Katalysatortyps führt zu Polyolefinen mit einer engen Molmassenverteilung, welche insbesondere für die Weiterverarbeitung mit Spritzgußverfahren geeignet sind. Polymere mit breiter Molmassenverteilung, wie sie z.B. für die Herstellung von Folien, Rohren oder Großhohlkörpern benötigt werden, lassen sich mit Hilfe dieses Katalysatortyps nicht erhalten.

Die Aufgabe bestand somit darin, ein möglichst einfaches Verfahren zur Herstellung von solchen Katalysatoren zu finden, die es ermöglichen, bei hoher Katalysatoraktivität ein Polymer mit einheitlicher grober Partikelform, geringen Feinkornmantel, hoher Schüttdichte und variierbarer Molmassenverteilung zu erzeugen.

Diese Aufgabe wird durch die Verwendung eines Katalysators gelöst, der durch Umsetzung einer chlorhaltigen Titan(III)-verbindung mit einem gelösten Magnesiumalkoholat, einer vierwertigen Übergangsmetallverbindung und einer aluminiumorganischen Verbindung hergestellt wird.

Die vorliegende Erfindung betrifft somit ein Verfahren zur Herstellung eines Ethylenpolymers mit einheitlicher grober Partikelform und hoher Schüttdichte durch Polymerisation von Ethylen oder von Ethylen mit bis zu 10 Gew.-%, bezogen auf die Gesamtmenge der Monomeren, eines 1-Olefins der Formel R⁹-CH=CH₂, worin R⁹ einen geradkettigen oder verzweigten Alkylrest mit 1 bis 12 C-Atomen bedeutet, in Suspension, in Lösung oder in der Gasphase, bei einer Temperatur von 20 bis 120°C und einem Druck von 2 bis 60 bar, in Gegenwart eines Katalysators bestchend aus einer im Übergangsmetall enthaltenden Komponente a und einer aluminiumorganischen Komponente b, dadurch gekennzeichnet, daß die Polymerisation durchgeführt wird in Gegenwart eines Katalysators, welcher aus
a) dem Gesamtprodukt aus der Reaktion
   a1) einer chlorhaltigen Titan(III)-verbindung mit
   a2) einem in einem inerten Lösemittel gelösten Magnesiumalkoholat der Formel I

      Mg(OR¹)(OR²) (I),

      worin R¹ und R² entweder gleich sind und einen Rest -CH₂CHR⁶R⁷ oder -(CH₂)ₙOR⁸ bedeuten, wobei R⁶ ein Wasserstoffatom oder ein C₁-C₆-Alkylrest, R⁷ ein C₃-C₅-Alkylrest, R⁸ ein C₁-C₄-Alkylrest und n eine ganze Zahl von 2 bis 6 ist, oder R¹ und R² verschieden sind, R¹ die vorgenannte Bedeutung hat und R² einen C₁-C₂₀-Alkylrest bedeutet, und mit
   a3) einer vierwertigen Übergangsmetallverbindung der Formel II

      MXₘ(OR³)₄₋ₘ (II),

      worin M Titan, Zirkon oder Hafnium, R³ einen C₁-C₉-Alkylrest und X ein Halogenatom bedeutet und m eine ganze Zahl von null bis 4 ist, und mit
   a4) einer aluminiumorganischen Verbindung der Formel III

      AlR⁴_{q}(OR⁵)ₚX_{3-q-p} (III),

      worin R⁴ und R⁵ gleich oder verschieden sind und einen C₁-C₆-Alkylrest, X ein Halogenatom, q eine Zahl von null bis 3 und p eine Zahl von null bis 1 bedeuten, im Verhältnis Mg : Ti : M : Al wie 1: 0.05 bis 2 : 0,05 bis 2 : 0,3 bis 4, wobei die Umsetzung der Komponente a1 mit den Komponenten a2 bis a4 entweder gleichzeitig erfolgt, oder zunächst a1 gleichzeitig mit a1 und a3 umgesetzt wird und anschließend die Reaktion mit a4 erfolgt, oder die Komponente a1 nacheinander mit den Komponenten a2 bis a4 zur Reaktion gebracht wird, und
b) einem Alumini-umtrialkyl mit 1 bis 6 C-Atomen in den Alkylresten oder dem Umsetzungsprodukt eines Aluminiumtrialkyls oder Aluminiumdialkylhydrids mit Isopren besteht.

Die FR-A-2 107 179 beschreibt im Rahmen der Angaben zur Herstellung der Katalysatorkomponenten T_{b} und T_{c} den Einsatz von in Benzin unlöslichen MgOR-Verbindungen, insbesondere von Mg(OEt)₂, während die vorliegende Erfindung ausdrücklich lösliche Mg-Alkoholate für die Katalysatorherstellung einsetzt. Die löslichen Mg-Alkoholate unterscheiden sich von den unlöslichen durch größere Kettenlänge der organischen Reste R.

Die US-A-4 356 111 beschreibt zur Herstellung der dort beschriebenen Katalysatoren die Verwendung von Magnesiumdialkylverbindungen und nicht die erfindungsgemäß eingesetzten Mg-Alkoholate mit längerkettigen Resten R.

Die FR-A-2 320 312 beschreibt den Einsatz von MgCl₂ und Al(OEt)₃ in einer Art Eintropfreaktion zusammen mit weiteren Al- und Ti-Verbindungen. Die Bildung von Mg-Alkoholaten ist in dieser Schrift nicht erwähnt und unter den angegebenen Reaktionsbedingungen auch nicht zu erwarten, weil mit größerer Wahrscheinlichkeit teilchlorierte Titanester wie Ti(OEt)Cl₃ entstehen.

Die chlorhaltige Titan (III)-verbindung, welche zur Herstellung der Katalysatorkomponente a verwendet wird, ist Titantrichlorid oder ein Titanalkoxychlorid, bevorzugt Titantrichlorid. Die Herstellung erfolgt beispielsweise durch Reduktion von oder eines Chloralkoxytitanates der Formel Ti(OR)₄₋ᵣClᵣ mit r = 1 bis 4 und R = C₂-C₈-alkyl mittels eines Alkylaluminiumsesquichlorids und/oder Isoprenylaluminium in einem inerten Dispergiermittel bei einer Temperatur von -60 bis +70°C, vorzugsweise -30 bis 0°C, und gegebenenfalls anschließender thermischer Behandlung bei 60 bis 150°C, sowie Wäsche mit einem inerten Dispergiermittel.

Diese Titan(III)-verbindung wird bevorzugt als Suspension in einem inerten Lösemittel eingesetzt.

Als Magnesiumalkoholat wird eine Verbindung der Formel I

Mg(OR¹)(OR²) (I)

verwendet. In dieser Formel sind R¹ und R² gleich oder verschieden. Wenn R¹ und R² gleich sind, bedeuten sie einen Rest -CH₂CHR⁶R⁷ oder einen Rest -(CH₂)ₙOR⁸, wobei R⁶ ein Wasserstoffatom, oder ein C₁-C₆-, vorzugsweise C₁-C₃-Alkylrest, R⁷ ein C₃-C₅-Alkylrest, R⁸ ein C₁-C₄-, vorzugsweise C₁-C₂-Alkylrest und n eine ganze Zahl von 2 bis 6 ist. Wenn R¹ und R² verschieden sind, hat R¹ die vorgenannte Bedeutung und R² ist ein C₁-C₂₀-, vorzugsweise C₃-C₁₀-Alkylrest.

Beispiele für derartige Magnesiumalkoholate sind
Magnesiumbis-(2-methyl-1-pentyloxid),
Magnesiumbis-(2-methyl-1-hexyloxid),
Magnesiumbis-(2-methyl-1-heptyloxid),
Magnesiumbis-(2-ethyl-1-pentyloxid),
Magnesiumbis-(2-ethyl-1-hexyloxid),
Magnesiumbis-(2-ethyl-1-heptyloxid),
Magnesiumbis-(2-propyl-1-heptyloxid),
Magnesiumbis-(4-methoxy-1-butyloxid),
Magnesiumbis-(6-methoxy-1-hexyloxid),
Magnesiumbis-(3-ethoxy-1-propyloxid),
Magnesiumbis-(4-ethoxy-1-butyloxid),
Magnesiumbis-(6-ethoxy-1-hexyloxid),
Magnesiumbis-pentyloxid,
Magnesiumbis-hexyloxid.

Brauchbare Magnesiumalkoholate sind auch die Umsetzungsprodukte von Magnesiummetall, Magnesiumalkylen oder Magnesiumalkoholaten mit Alkoholen R¹OH (R¹ wie vorstehend). Bevorzugt von diesen Produkten ist das Umsetzungsprodukt eines Magnesiumalkoholats mit einem Alkohol R¹OH in Gegenwart von 0,02 bis 0,2 mol-% Triethylaluminium (als Viskositätserniedriger) bei 100 bis 140°C.

Die vierwertige Übergangsmetallverbindung ist eine der Formel II

MXₘ(OR³)₄₋ₘ (II),

worin M Titan, Zirkon oder Hafnium, vorzugsweise Titan oder Zirkon, R³ einen Alkylrest mit 1 bis 9, vorzugsweise 1 bis 4 C-Atomen, und X ein Halogenatom, vorzugsweise Chlor, bedeuten und m null bis 4, vorzugsweise 2 bis 4 ist. Die vierwertige Übergangsmetallverbindung der Formel II oder ein Addukt derselben mit einem der erfindungsgemäß verwendbaren Elektronendonatoren ist in Kohlenwasserstoffen löslich.

Beispiele für Verbindungen der Formel II sind:
TiCl₄, TiCl₃(OC₂H₅), TiCl₂(OC₂H₅)₂, TiCl(OC₂H₅)₃, Ti(OC₂H₅)₄, TiCl₃(OC₃H₇), TiCl₂(OC₃H₇)₂, TiCl(OC₃H₇)₃, Ti(OC₃H₇)₄, TiCl₃(OC₄H₉), TiCl₂(OC₄H₉)₂, TiCl(OC₄H₉)₃, Ti(OC₄H₉)₄, TiCl₃(OC₆H₁₃), TiCl₂(OC₆H₁₃)₂, TiCl(OC₆H₁₃)₃, Ti(OC₆H₁₃)₄, Ti(OC₉H₁₉)₄, TiBr₄, TiBr₃(OR³), TiBr₂(OR³)₂, TiBr(OR³)₃, TiJ₄, TiJ₃(OR³), TiJ₂(OR³)₂, TiJ(OR³)₃, ZrCl₄, ZrBr₄, ZrJ₄, Zr(OC₂H₅)₄, Zr(OC₃H₇)₄, Zr(OC₄H₉)₄, ZrCl₂(OC₃H₇)₂, vorzugsweise werden TiCl₄, ZrCl₄, Ti(OC₂H₅)₄, Ti(OC₃H₇)_{4'} Zr(OC₃H₇)_{4'} Ti(OC₄H₉)₄ und Zr(OC₄H₉)₄ verwendet.

Der vierte Reaktionspartner zur Herstellung der Katalysatorkomponente a ist eine aluminiumorganische Verbindung der Formel III

AlR⁴ _{q}(OR⁵)ₚX_{3-q-p} (III),

worin R⁴ und R⁵ gleich oder verschieden sind und einen Alkylrest mit 1 bis 6, vorzugsweise 1 bis 4 Kohlenstoffatomen, X ein Halogenatom, vorzugsweise Chlor, und q eine Zahl von null bis 3, vorzugsweise 1 bis 2, und p eine Zahl von null bis 1, vorzugsweise kleiner 0,5, bedeuten.

Geeignete aluminiumorganische Verbindungen sind:
Al(C₂H₅)₃, Al(C₂H₅)₂Cl, Al₂(C₂H₅)₃Cl₃, Al(C₂H₅)Cl₂, Al(C₃H₇)₃, Al(C₃H₇)₂Cl, Al₂(C₃H₇)₃Cl₃, Al(C₃H₇)Cl₂, Al(C₄H₉)₃, Al(C₄H₉)₂Cl, Al₂(C₄H₉)₃Cl₃, Al(C₄H₉)Cl₂, sowie Mono- und Dihalogenide verschiedener Zusammensetzung. Vorzugsweise werden aus dieser Gruppe Al(C₂H₅)₂Cl, Al₂(C₂H₅)₃Cl₃ und Al(C₂H₅)Cl₂ verwendet.

Ein möglicher fünfter, jedoch nicht unbedingt erforderlicher Reaktionspartner zur Herstellung der Katalysatorkomponente a ist ein Elektronendonor. Dieser Elektronendonor ist ein aliphatischer oder alicyclischer Ester, ein aliphatischer Ether, ein aliphatischer Aldehyd oder eine aliphatische Carbonsäure. Beispiele für derartige Elektronendonoren (ED) sind:
Dimethylether, Diethylether, Di-n-propylether, Di-n-butylether, Di-i-amylether, Tetrahydrofuran, Dioxan, Ethylacetat, Butylacetat, Essigsäure. Vorzugsweise werden Diethylether, Dibutylether und Ethylacetat verwendet.

Falls ein Elektronendonor verwendet wird, kann dieser vor oder während der Reaktion mindestens einem der vier anderen Reaktionspartner zugesetzt werden. Dabei beträgt das molare Verhältnis Elektronendonor:Mg-alkoholat 0 : 1 bis 2 : 1, bevorzugt 0 : 1 bis 1 : 1.

Für die Herstellung der Komponente a gibt es mehrere Möglichkeiten:
Die chlorhaltige Titan(III)-verbindung wird entweder
1) gleichzeitig mit dem gelösten Magnesiumalkoholat, der vierwertigen Übergangsmetallverbindung und der aluminiumorganischen Verbindung umgesetzt (= Reaktionsfolge (a¹+a²+a³+a⁴)), oder
2) nacheinander mit dem gelösten Magnesiumalkoholat, der vierwertigen Übergangsmetallverbindung und der aluminiumorganischen Verbindung umgesetzt (= Reaktionsfolge (a¹)+(a²)+(a³)+(a⁴)), oder
3) zunächst mit dem gelösten Magnesiumalkoholat und der vierwertigen Übergangsmetallverbindung umgesetzt und danach das gebildete Reaktionsprodukt mit der aluminiumorganischen Verbindung zur Reaktion gebracht (= Reaktionsfolge (a¹+a²+a³)+(a⁴)).

Die gleichzeitige Umsetzung der Komponenten a1 bis a4 zur Katalysatorkomponente a führt zu Polymeren mit enger Molmassenverteilung bei der Anwendung der Komponente a zur Polymerisation. Umgekehrt kann man durch aufeinanderfolgende Umsetzung der Komponente a1 mit den Komponenten a2 bis a4 zu einer Katalysatorkomponente a gelangen, welche bei der Polymerisation ein Polymer mit breiter Molmassenverteilung liefert.

Die gleichzeitige Umsetzung der chlorhaltigen Titan(III)-verbindung mit den Reaktionspartnern a2) bis a4) erfolgt bei einer Temperatur von -20 bis 120°C, innerhalb von 0,1 bis 10 Stunden, vorzugsweise 0,25 bis 4 Stunden. Wird zunächst a1) gleichzeitig mit a2) und a3) umgesetzt, so wird diese Reaktion bei einer Temperatur von -20 bis 120°C, innerhalb von 0,1 bis 10 Stunden, vorzugsweise 0,25 bis 4 Stunden, durchgeführt. Die anschließende Umsetzung des gebildeten Reaktionsprodukts erfolgt bei -50 bis 150°C, bevorzugt -20 bis 120°C, innerhalb von 0,1 bis 10 Stunden, bevorzugt 0,25 bis 4 Stunden. Wird die Titan(III)-verbindung nacheinander mit den anderen Reaktionspartnern umgesetzt, wird jede Reaktionsstufe bei -50 bis 150°C, bevorzugt -20 bis 120°C, innerhalb 0,1 bis 10 Stunden, bevorzugt 0,25 bis 4 Stunden durchgeführt.

Die gesamte Reaktionsfolge einschließlich der Herstellung der Ti(III)-verbindung kann ohne Wechsel des Lösemittels durchgeführt werden. Als inerte Lösemittel für die vorgenannten Umsetzungen werden aliphatische Kohlenwasserstoffe wie Butan, Pentan, Hexan, Heptan, Isooctan und Benzin mit einem Siedebereich von 140 bis 170 °C, die sorgfältig von Sauerstoff, Schwefelverbindungen und Feuchtigkeit befreit worden sind, eingesetzt. Entsprechende Lösungsmittelgemische sind ebenfalls geeignet. Bevorzugt werden die Benzinfraktion mit einem Siedebereich von 140 bis 170°C oder Hexan verwendet.

Titan(III)-verbindung, Magnesiumalkoholat, vierwertige Übergangsmetallverbindung (II) und die aluminiumorganische Verbindung der Formel III werden im (molaren) Verhältnis Mg:Ti:M:Al wie 1 : 0,05 bis 2 : 0,05 bis 2 : 0,3 bis 4, vorzugsweise 1 : 0,05 bis 1 : 0,05 bis 1 : 0,3 bis 2 umgesetzt.

Im Anschluß an die Umsetzung wird die Suspension der Katalysatorkomponente a null bis 48 Stunden, vorzugsweise null bis 16 Stunden, bei 0 bis 160°C, vorzugsweise 80 bis 150°C gerührt.

Die so hergestellte Suspension der Katalysatorkomponente a kann ohne Abtrennung des Dispergiermittels und der Nebenprodukte direkt zur Polymerisation verwendet werden.

Als Katalysatorkomponente b (oder Aktivator) wird ein Aluminiumtrialkyl mit 1 bis 6 C-Atomen in den Alkylresten, wie z.B. Triethylaluminium, Triisobutylaluminium, Triisohexylaluminium oder das als Aluminiumisoprenyl bekannte Umsetzungsprodukt eines Aluminiumtrialkyls oder -dialkylhydrids mit Isopren verwendet. Bevorzugt sind Triethylaluminium und Aluminiumisoprenyl.

Die Polymerisation wird ein- oder zweistufig, vorzugsweise als Suspensionspolymerisation, in einem inerten Dispergiermittel durchgeführt. Als Dispergiermittel sind die gleichen organischen Lösemittel geeignet, wie sie zur Herstellung der Katalysatorkomponente a beschrieben wurden. Die Polymerisation in der Gasphase ist jedoch auch möglich.

Die Polymerisationstemperatur beträgt 20 bis 120°C, bevorzugt 70 bis 90°C; der Druck liegt im Bereich von 2 bis 60 bar, vorzugsweise 4 bis 20 bar.

Für den Fall, daß die Reaktion zweistufig durchgeführt wird, liegt das Mengenverhältnis der in den Stufen 1 und 2 jeweils gebildeten Polyolefine im Bereich von 30 zu 70 bis 70 zu 30, wobei das in der Stufe 1 gebildete Polymer kontinuierlich in die Stufe 2 überführt wird. Das endgültige Polymergemisch wird kontinuierlich aus Stufe 2 abgezogen.

Mit dem erfindungsgemäß zu verwendenden Katalysatorsystem wird Ethylen oder Ethylen mit bis zu 10 Gew.-%, bezogen auf die Gesamtmonomermenge, eines 1-Olefins der Formel R⁹-CH=CH₂, worin R⁹ einen geradkettigen oder verzweigten Alkylrest mit 1 bis 12, vorzugsweise 1 bis 10 C-Atomen, bedeutet, polymerisiert. Beispiele sind Propylen, 1-Buten, 1-Penten, 1-Hexen, 1-Octen, 4-Methylpenten-1. Vorzugsweise werden Propylen, 1-Buten und 1-Hexen eingesetzt.
Dabei wird das Comonomere vorzugsweise in der ersten Stufe, in welcher ein Polymerisat mit der höheren Molmasse entsteht, eingeführt.

Das Gesamtpolymerisat aus der zweiten Stufe wird in bekannter Weise vom Dispergiermittel abgetrennt und getrocknet.

Ein Vorteil des erfindungsgemäßen Verfahrens ist die sehr einfache Herstellung der Übergangsmetallkomponente des Katalysators. Diese wird durch einfaches Zusammenbringen der Einzelkomponenten unter den entsprechenden Reaktionsbedingungen erhalten.

Eine Wäsche mit einem inerten Kohlenwasserstoff entfällt.

Dadurch entsteht auch keine Waschlauge, die in weiteren Prozeßschritten erst wieder zersetzt und unter Anfall von Abwasser aufgearbeitet werden muß.

Weiterhin treten auch bei längerem kontinuierlichen Betrieb keine Polymerablagerungen an den Kesselwänden und in den Verbindungsleitungen auf und der Gehalt des Produktes an Teilchen mit einer Korngröße unter 100 µm ist bedeutend geringer.

Der große Vorteil des erfindungsgemäßen Verfahrens besteht jedoch darin, daß der erfindungsgemäße Katalysator bei hoher Aktivität ein Ethylenpolymer mit einem sehr großen mittleren Korndurchmesser von 250 bis 700 µm, einer hohen Schüttdichte und variierbarer Molmassenverteilung erzeugt. Das Polymer besitzt eine geringe Restfeuchte, wodurch sich die Trocknungskosten verringern.

Die Korngrößenverteilung ist in hohem Maße einheitlich.

Darüberhinaus ist der Feinkornanteil (% < 100 µm) im erfindungsgemäß hergestellten Polymer sehr gering.

Weiterhin ist die Regelung der Molmasse der Polyolefine durch Wasserstoff wesentlich effizienter als bei herkömmlichen Verfahren.

### Die nachfolgenden Beispiele sollen die Erfindung erläutern.

Es bedeuten:
- KA :: Katalysatoraktivität [kg Produkt/mmol Ti]
- MFI 190/5 :: Schmelzindex nach DIN 53735, gemessen bei 190°C bei einer Belastung von 5 kg
- MFI 190/15 :: gemessen bei 190°C bei einer
- MFI 190/21,6 :: Belastung von 15 bzw. 21,6 kg
- MFR 15/5 :: MFI 190/15 / MFI 190/5
- d₅₀ :: mittlere Teilchengröße, erhalten durch Siebfraktionierung
- SD :: Schüttdichte, gemessen nach DIN 53468
- VZ :: Viskositätszahl, gemessen nach DIN 53728

### Beispiel 1: Herstellung der Ti(III)-Verbindung

In einem 1-dm³-Reaktor wurden 400 cm³ Benzinfraktion (Kp. 140-170°C), 0,25 mol Ethylaluminiumsesquichlorid und 0,5 mol Isoprenylaluminium vorgelegt. Bei -40°C wurden in 5 h 220 cm³ TiCl₄ (2 mol) zudosiert. Anschließend wurde der Ansatz 1 H bei 0°C, 1 h bei 40°C und 1 h bei 80°C gerührt. Danach wurde die Suspension mit der Benzinfraktion auf 1000 cm³ aufgefüllt.

### Herstellung der Katalysatorkomponente a

In einem 1-dm³-Rührgefäß wurden unter Ausschluß von Luft und Feuchtigkeit 15 mmol Ti der vorgenannten TiCl₃-Suspension in 200 cm³ einer Benzinfraktion (Kp. 140-170°C) vorgelegt. Unter Rühren und Argonüberlagerung wurden bei einer Temperatur von 20°C innerhalb von 120 min gleichzeitig eine Lösung von 0,1 mol Magnesiumbis(2-methyl-1-pentyloxid) in 200 cm³ der Benzinfraktion, 100 cm³ einer 0,3 molaren Lösung von TiCl₄ in der Benzinfraktion sowie 100 cm³ einer 0,8 molaren Lösung von Ethylaluminiumsesquichlorid in der Benzinfraktion zugegeben. Die rötlichbraune Suspension wurde anschließend 120 min bei 105°C gerührt.

**Tabelle 1**

| Herstellung der Katalysatorkomponente a | | | |
|---|---|---|---|
| Beispiel | Ti(III)-Verbindung (Suspension) gemäß | eingesetzte Ti(III)-Suspension a1) | |
| | | [mmol Ti] | [cm³] |
| 2 | Vergl.beispiel A | 60 | 200 |
| 3 | Vergl.beispiel B | 15 | 200 |
| 4 | Beispiel 1 | 7,5 | 50 |
| 5 | Beispiel 1 | 7,5 | 40 |

Die Zugabe der Lösungen (Reaktanten a2 - a4) erfolgte entsprechend Beispiel 1. Die Nachreaktion wurde bei 110°C in 60 min vorgenommen.

Zum Einsatz in den Polymerisationsversuchen wurden diese Suspensionen in der Regel mit der Benzinfraktion auf eine Ti-Konzentration von 0,02 mol/dm³ verdünnt.

### Beispiel 6

In einem 1-dm³-Rührgefäß wurden unter Ausschluß von Luft und Feuchtigkeit eine 15 mmol Ti enthaltende TiCl₃-Suspension (nach Beispiel 1) in 200 cm³ einer Benzinfraktion (Kp. 140-170°C) vorgelegt.

Unter Rühren und Argonüberlagerung wurden bei einer Temperatur von 25 °C innerhalb von 120 min gleichzeitig eine Lösung von 0,1-Mol Magnesiumbis(2-methyl-1-pentyloxid) in 200 cm³ der Benzinfraktion und 100 cm³ einer 0,3 molaren Lösung von TiCl₄ in der Benzinfraktion zugegeben. Anschließend wurde die Suspension mit 100 cm³ einer 0,8 molaren Lösung von Ethylaluminiumsesquichlorid in der Benzinfraktion in 60 min bei 80°C umgesetzt.

### Beispiel 7: Ethylenpolymerisation

In einem 1,5-dm³-Reaktor, der mit 750 cm³ der Benzinfraktion beschickt wurde, wurden bei 85°C unter N₂-Überlagerung 5 cm³ einer 1 molaren Isoprenylaluminium-Lösung und 1 cm³ der nach Beispiel 1 hergestellten Suspension (20 mmol/dm³ bezogen auf Ti) gegeben. Danach wurden 2 bar Wasserstoff vorgelegt und 5 bar Ethylen aufgedrückt. Der Gesamtdruck von 7 bar wurde über 2 h gehalten, indem das verbrauchte Ethylen nachdosiert wurde. Die Polymerisation wurde durch Entspannen der Gase abgebrochen und das Polymere durch Filtration und Trocknung vom Dispergiermittel abgetrennt.

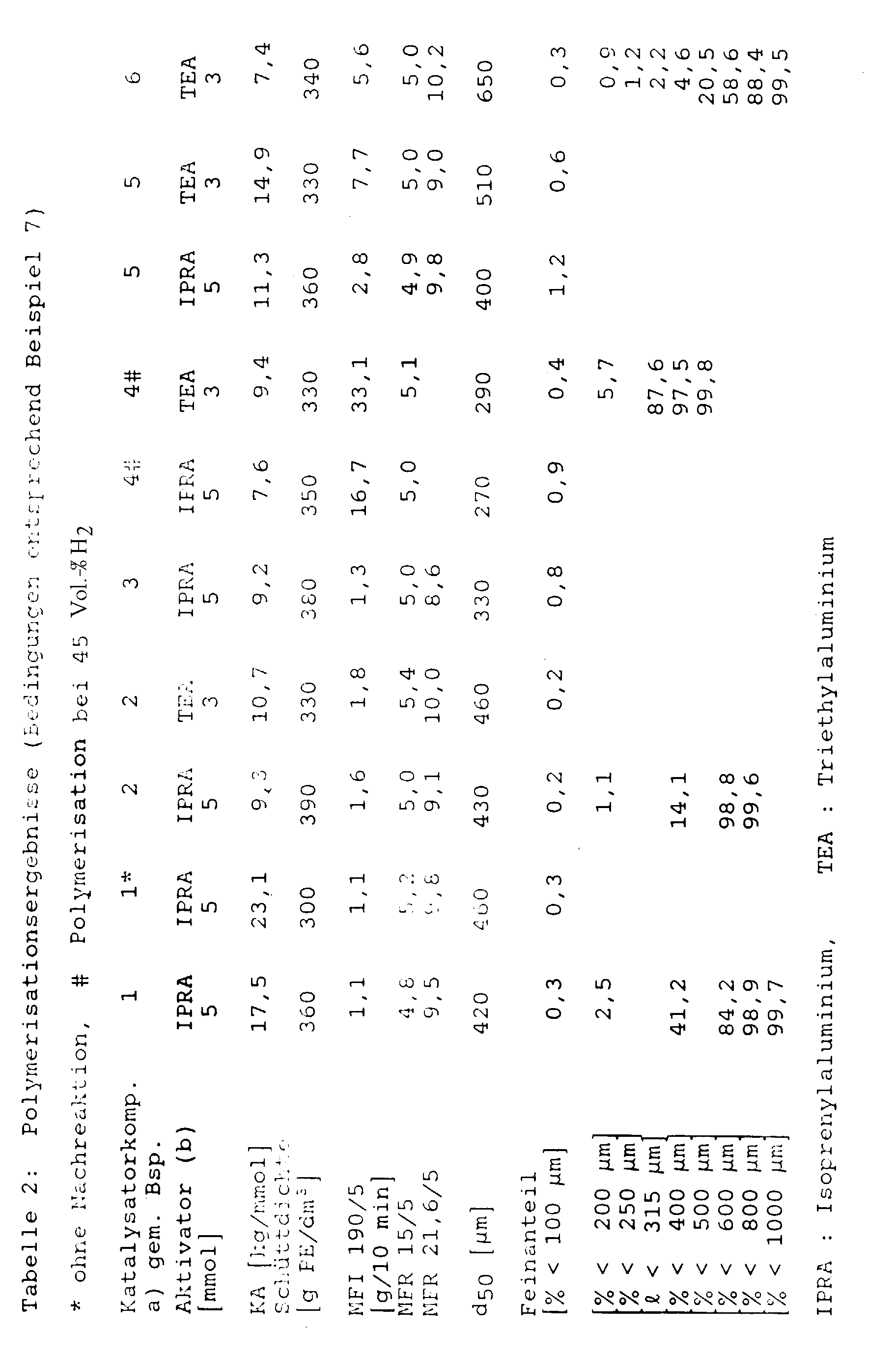

### Vergleichsbeispiel A

In einem 1-dm³-Reaktor wurden 200 cm³ Benzinfraktion (Kp. 140-170°C), 0,1 mol Ethylaluminiumsesquichlorid und 0,4 mol Isoprenylaluminium vorgelegt. Bei -20°C wurden in 3 h 55 cm³ TiCl₄ (0,5 mol) und bei 10°C in 3 h 55 cm³ TiCl₄ (0,5 mol) zudosiert. Anschließend wurde der Ansatz 2 h bei 80°C gerührt.

Die Ethylenpolymerisation erfolgte wie in Beispiel 7 mit 5 mmol Isoprenylaluminium.

Es wurden 58 g Polyethylen mit einer Schüttdichte von 300 g/dm³, einer mittleren Korngröße von 210 µm und einem Feinanteil von 3,8 % kleiner 100 µm erhalten.

Das Produkt hatte einen MFI 190/5 = 1,2 g/10 min. Der MFR 15/5 bzw. MFR 21,6/5 war 5,7 bzw. 11,5. Die Katalysatoraktivität entsprach 2,9 kg PE/mmol Ti.

### Vergleichsbeispiel B (gemäß US-A-3,773,735)

In einem 1-dm³-Reaktor wurden 400 cm³ Benzinfraktion (Kp. 140-170°C), 0,5 mol Ethylaluminiumdichlorid und 0,5 mol Isoprenylaluminium vorgelegt. Bei -25°C wurden in 3,5 h 220 cm³ TiCl₄ (2 mol) zudosiert. Anschließend wurde 1 h bei 0°C und 1 h bei 20°C gerührt. Der Katalysator wurde 4-mal mit 600 cm³ Benzinfraktion gewaschen. Die Polymerisation (Stoffmengen) erfolgte wie in Beispiel 7 mit 5 mmol IPRA. Es wurden 51 g Polyethylen mit einer Schüttdichte von 310 g/dm³, einer mittleren Korngröße von 240 µm und einem Feinanteil von 2,6 % kleiner 100 µm erhalten. Das Produkt hatte einen MFI 190/5 = 0,5 g/10 min. Der MFR 15/5 bzw. MFR 21,6/5 war 5,6 bzw. 11,6. Die Katalysatoraktivität entsprach 1,5 kg PE/mmol Ti.

### Beispiel 8

In einem 1,5-dm³-Reaktor, der mit 500 cm³ der Benzinfraktion beschickt wurde, wurden bei 70°C unter N₂-Überlagerung 1 cm³ einer 1 molaren Triethylaluminium-Lösung und 12 cm³ der nach Beispiel 4 hergestellten Komponente a (unverdünnt, 1 mmol Ti) gegeben. Danach wurde 1 bar Ethylen aufgedrückt und der Druck 1 h gehalten, indem das verbrauchte Ethylen nachdosiert wurde. Die Polymerisation wurde durch Entspannen der Gase abgebrochen und die Polymersuspension unter Stickstoffüberlagerung in ein Schlenkgefäß überführt und das Volumen der Suspension durch Zugabe der Benzinfraktion auf 1000 cm³ ergänzt. Die Ausbeute der Präpolymerisation betrug 94 g/mmol Ti. Die Viskositätszahl (VZ) des Präpolymerisats war größer 4000 cm³/g.

### Beispiel 9

Die Polymerisation erfolgte wie in Beispiel 7 beschrieben mit 5 mmol Isoprenylaluminium und 20 cm³ der in Beispiel 8 hergestellten Suspension. Der Wasserstoffgehalt betrug 45 Vol.-% und der Gesamtdruck 7 bar. Das Polymeristionsergebnis war wie folgt:

| | | | |
|---|---|---|---|
| KA | 7,4 kg/mmol Ti, | Schüttdichte | 440 g/dm³ |
| d₅₀ | 260 µm, | Feinanteil | 0,9 % < 100 µm |
| MFI 190/5 | 15,1 g/10 min, | MFR 15/5 | 5,4 |

9,6 % < 200 µm, 90,8 % < 315 µm, 98,8 % < 400 µm, 99,9 % < 500 µm

### Beispiel 10

Die Herstellung des Präpolymerisats erfolgte wie in Beispiel 8, allerdings mit 120 cm³ (10 mmol Ti) der Komponente a, Beispiel 4, und 3 mmol Triethylaluminium. Die Ausbeute betrug 10,4 g/mmol Ti bei einer VZ von 2600 cm³/g. Das Volumen der erhaltenen Suspension wurde mit der Benzinfraktion auf 1000 cm³ ergänzt.

### Beispiel 11

Die Polymerisation erfolgte wie in Beispiel 9, aber mit 3 mmol Triethylaluminium und 2 cm³ der Suspension gemäß Beispiel 10.

| | | | |
|---|---|---|---|
| KA | 10,2 kg/mmol Ti, | Schüttdichte | 420 g/dm³ |
| d₅₀ | 280 µm, | Feinanteil | 0,6 % < 100 µm |
| MFI 190/5 | 29,6 g/10 min, | MFR 15/5 | 5,0 |

5,4 % < 200 µm, 83,2 % < 315 µm, 94,8 % < 400 µm, 99,7 % < 500 µm

### Beispiel 12

Die Polymerisation erfolgte wie in Beispiel 7 mit 3 mmol Triethylaluminium und 0,5 cm³ der Komponente a nach Beispiel 4 (0,01 mmol Ti) bei 80°C, ohne Wasserstoff und einem Ethylendruck von 6 bar.

| | | | |
|---|---|---|---|
| KA | 18,6 kg/mmol Ti, | Schüttdichte | 410 g/dm³ |
| d₅₀ | 330 µm, | Feinanteil | 0,2 % < 100 µm |
| VZ | 1300 cm³/g. | | |

### Beispiel 13

Die Herstellung des Präpolymerisats erfolgte entsprechend Beispiel 8 mit 89 cm³ der nach Beispiel 5 hergestellten Komponente a (10 mmol Ti).

### Beispiel 14

In einem 150-dm³-Reaktor wurden 100 dm³ der Benzinfraktion, 50 mmol Isoprenylaluminium und 200 cm³ der Suspension 10 (2 mmol Ti) gegeben. Anschließend wurden bei einer Polymerisationstemperatur von 85°C 5 kg Ethylen/h und soviel H₂ eingeleitet, daß der H₂-Gehalt im Gasraum 45 Vol.-% betrug. Nach 6 h wurde die Polymerisation bei einem Druck von 5,2 bar durch Entspannen beendet. Die Suspension wurde filtriert und das Polyethylenpulver durch Überleiten von heißem Stickstoff getrocknet.

Es wurden 24,8 kg Polyethylen erhalten. Dies entspricht einer Kontaktaktivität von 12,4 kg PE/mmol Ti. Das Polyethylenpulver besaß einen MFI 190/5 von 5,9 g/10 min und einen MFR 15/5 bzw. MFR 21,6/5 von 4,9 bzw. 10,2. Die Dichte war 0,960 und die Schüttdichte 430 g/dm³. Die mittlere Korngröße d₅₀ betrug 380 µm bei einem Feinanteil < 100 µm von 1 %.

### Beispiel 15

In einem 1-dm³-Rührgefäß wurden unter Ausschluß von Luft und Feuchtigkeit 33 cm³ (65 mmol Ti) der gemäß Beispiel 1 hergestellten TiCl₃-Suspension in 50 cm³ einer Benzinfraktion (Kp. 140-170°C) vorgelegt und bei einer Temperatur von 25°C unter Rühren und Argonüberlagerung innerhalb von 20 min mit einer Lösung von 0,1 mol Magnesiumbis(2-methyl-1-pentyloxid) in 200 cm³ der Benzinfraktion umgesetzt. Anschließend wurden bei 25°C in 60 min 100 cm³ einer 0,3 molaren Lösung von TiCl₄ in der Benzinfraktion zudosiert. Danach erfolgte bei 80°C die Zugabe einer Lösung von 60 mmol Al₂Et₃Cl₃ in 70 cm³ der Benzinfraktion innerhalb von 20 min.

**Tabelle 3**

| Herstellung der Katalysatorkomponente a | | | |
|---|---|---|---|
| Beispiel | Ti(III)-Verbindung (Suspension) gemäß | eingesetzte Ti(III)-Suspension a1) | |
| | | [mmol Ti] | [cm³] |
| 16 | Vergl.beispiel A | 30 | 200 |
| 17 | Vergl.beispiel B | 22 | 200 |
| 18 | Beispiel 15 | 15 | 50 |
| 19 | Beispiel 15 | 11 | 200 |
| 20 | Beispiel 15 | 7 | 200 |

Die Zugabe der Magnesiumverbindung erfolgte entsprechend Beispiel 15, allerdings in 60 min. Die Zugabe der Titan(IV)-verbindung erfolgte entsprechend Beispiel 15. In den Beispielen 16 bis 20 wurden 80 mmol Al₂Et₃Cl₃ gelöst in 100 cm³ der Benzinfraktion innerhalb von 60 min zugegeben.

Zum Einsatz in den Polymerisationsversuchen wurden die Suspensionen a der Beispiele 15 bis 20 auf eine Ti-Konzentration von 0,02 mol/dm³ verdünnt.

### Beispiel 21: Ethylenpolymerisation

In einem 1,5-dm³-Reaktor, der mit 750 cm³ der Benzinfraktion beschickt wurde, wurden bei 85°C unter N₂-Überlagerung 2,5 cm³ einer 1 molaren Isoprenylaluminium-Lösung und 1 cm³ der nach Beispiel 15 hergestellten Suspension (20 mmol/dm³ bezogen auf Ti) gegeben. Danach wurden 2 bar Wasserstoff vorgelegt und 5 bar Ethylen aufgedrückt. Der Gesamtdruck von 7 bar wurde über 2 h gehalten, indem das verbrauchte Ethylen nachdosiert wurde. Die Polymerisation wurde durch Entspannen der Gase abgebrochen und das Polymere durch Filtration und Trocknung vom Dispergiermittel abgetrennt.

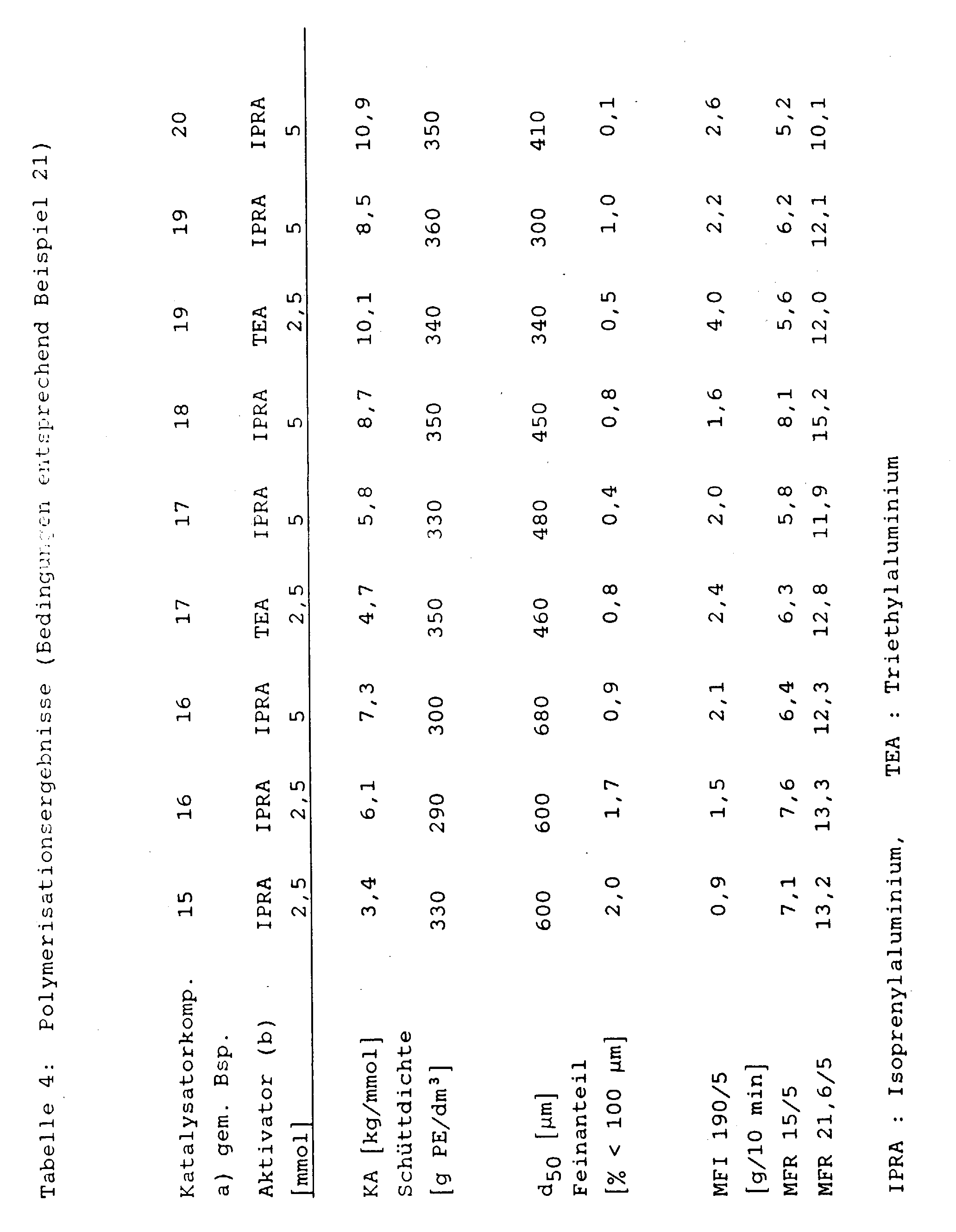

### Beispiel 22

In einem 150-dm³-Reaktor wurden 100 dm³ Benzinfraktion, 100 mmol Isoprenylaluminium und 37,4 cm³ der unverdünnten Suspension von Beispiel 18 (4 mmol Ti) gegeben. Anschließend wurden bei einer Polymerisationstemperatur von 85°C 7,5 kg Ethylen/h und soviel H₂ eingeleitet, daß der H₂-Gehalt im Gasraum 30 Vol.-% betrug. Nach 4,5 h wurde die Polymerisation bei einem Druck von 3,1 bar durch Entspannen beendet. Die Suspension wurde filtriert und das Polyethylenpulver durch Überleiten von heißem Stickstoff getrocknet.

Es wurden 32,6 kg Polyethylen erhalten. Dies entspricht einer Kontaktaktivität von 8,2 kg PE/mmol Ti. Das Polyethylenpulver besaß einen MFI 190/5 von 3,2 g/10 min und einen MFR 15/5 bzw. MFR 21,6/5 von 5,9 bzw. 14,1. Die Dichte war 0,958 und die Schüttdichte 380 g/dm³. Die mittlere Korngröße d₅₀ betrug 410 µm bei einem Feinanteil < 100 µm von 1 %.

## Patentansprüche

1. Verfahren zur Herstellung eines Ethylenpolymers mit einheitlicher grober Partikelform und hoher Schüttdichte durch Polymerisation von Ethylen oder von Ethylen mit bis zu 10 Gew.-%, bezogen auf die Gesamtmenge der Monomeren, eines 1-Olefins der Formel R⁹-CH=CH₂, worin R⁹ einen geradkettigen oder verzweigten Alkylrest mit 1 bis 12 C-Atomen bedeutet, in Suspension, in Lösung oder in der Gasphase, bei einer Temperatur von 20 bis 120°C und einem Druck von 2 bis 60 bar, in Gegenwart eines Katalysators bestehend aus einer ein Übergangsmetall enthaltenden Komponente a und einer aluminiumorganischen Komponente b, dadurch gekennzeichnet, daß die Polymerisation durchgeführt wird in Gegenwart eines Katalysators, welcher aus
a) dem Gesamtprodukt aus der Reaktion
a1) einer chlorhaltigen Titan(III)-verbindung mit
a2) einem in einem inerten Lösemittel ausgewählt aus der Gruppe bestehend aus Butan, Pentan, Hexan, Heptan, Isooctan, Benzin mit einem Siedebereich von 140 bis 170 °C und Mischungen von diesen gelösten Magnesiumalkoholat der Formel I
Mg(OR¹) (OR²) (I),
worin R¹ und R² entweder gleich sind und einen Rest -CH₂CHR⁶R⁷ oder -(CH₂)ₙOR⁸ bedeuten, wobei R⁶ ein Wasserstoffatom oder ein C₁-C₆-Alkylrest, R⁷ ein C₂-C₆-Alkylrest, R⁸ ein C₁-C₄-Alkylrest und n eine ganze Zahl von 2 bis 6 ist, oder R¹ und R² verschieden sind, R¹ die vorgenannte Bedeutung hat und R² einen C₁-C₂₀-Alkylrest bedeutet, und mit
a3) einer vierwertigen Übergangsmetallverbindung der Formel II
MXₘ(OR³)₄₋ₘ (II),
worin M Titan, Zirkon oder Hafnium, R³ einen C₁-C₉-Alkylrest und X ein Halogenatom bedeutet und m eine ganze Zahl von null bis 4 ist, und mit
a4) einer aluminiumorganischen Verbindung der Formel III
AlR⁴_{q}(OR⁵)ₚX_{3-q-p} (III),
worin R⁴ und R⁵ gleich oder verschieden sind und einen C₁-C₆-Alkylrest, X ein Halogenatom, q eine Zahl von null bis 3 und p eine Zahl von null bis 1 bedeuten, im Verhältnis Mg:Ti:M:Al wie 1 : 0,05 bis 2 : 0,05 bis 2:0,3 bis 4, wobei die Umsetzung der Komponente a1 mit den Komponenten a2 bis a4 entweder gleichzeitig erfolgt, oder zunächst a1 gleichzeitig mit a2 und a3 umgesetzt wird und anschließend die Reaktion mit a4 erfolgt, oder die Komponente a1 nacheinander mit den Komponenten a2 bis a4 zur Reaktion gebracht wird, und
b) einem Aluminiumtrialkyl mit 1 bis 6 C-Atomen in den Alkylresten oder dem Umsetzungsprodukt eines Aluminiumtrialkyls oder Aluminiumdialkylhydrids mit Isopren besteht.

2. Verfahren gemäß Anspruch 1, dadurch gekennzeichnet, daß die Komponente a1) gleichzeitig mit den Komponenten a2) bis a4) umgesetzt wird.

3. Verfahren gemäß Anspruch 1, dadurch gekennzeichnet, daß bei der Herstellung der Katalysatorkomponente a das Verhältnis Mg:Ti:M:Al = 1 : 0,05 bis 1 : 0,05 bis 1 : 0,3 bis 2 ist.

4. Verfahren gemäß Anspruch 1, dadurch gekennzeichnet, daß die chlorhaltige Titan(III)-verbindung a1 Titantrichlorid ist.

## Claims

1. A process for the preparation of an ethylene polymer having a uniform, coarse particle shape and high bulk density by polymerizing ethylene or ethylene with up to 10% by weight, based on the total amount of the monomers, of a 1-olefin of the formula R⁹-CH=CH₂ in which R⁹ is a straight-chain or branched alkyl radical having 1 to 12 carbon atoms, in suspension, in solution or in the gas phase, at a temperature of from 20 to 120°C and a pressure of from 2 to 60 bar, in the presence of a catalyst comprising a component a containing a transition metal and an organoaluminum component b, which comprises carrying out the polymerization in the presence of a catalyst which comprises
a) the entire product from the reaction of
a1) a chlorine-containing titanium(III) compound with
a2) a magnesium alkoxide of the formula I
Mg(OR¹) (OR²) (I),
in which R¹ and R² are either identical and are a -CH₂CHR⁶R⁷ or -(CH₂)ₙOR⁸ radical where R⁶ is a hydrogen atom or a C₁-C₆-alkyl radical, R⁷ is a C₃-C₅-alkyl radical, R⁸ is a C₁-C₄-alkyl radical and n is an integer from 2 to 6, or R¹ and R² are different and R¹ has the abovementioned meaning and R² is a C₁-C₂₀-alkyl radical, dissolved in an inert solvent selected from the group consisting of butane, pentane, hexane, heptane, isooctane and petroleum ether having a boiling range of from 140 to 170°C, and mixtures thereof, and with
a3) a tetravalent transition metal compound of the formula II
MXₘ(OR³)₄₋ₘ (II),
in which M is titanium, zirconium or hafnium, R³ is a C₁-C₉-alkyl radical and X is a halogen atom and m is an integer from zero to 4, and with
a4) an organoaluminum compound of the formula III
AlR⁴_{q}(OR⁵)ₚX_{3-q-p} (III),
in which R⁴ and R⁵ are identical or different and are a C₁-C₆-alkyl radical, X is a halogen atom, q is a number from zero to 3 and p is a number from zero to 1,
in an Mg:Ti:M:Al ratio such as 1 : 0.05 to 2 : 0.05 to 2 : 0.3 to 4, the reaction of component a1 with components a2 to a4 either being carried out simultaneously or a1 first being reacted simultaneously with a2 and a3 and the reaction with a4 being carried out subsequently, or component a1 being reacted successively with components a2 to a4, and
b) a trialkylaluminum compound having 1 to 6 carbon atoms in the alkyl radicals or the product of the reaction of a trialkyaluminum compound or dialkyl-aluminum hydride with isoprene.

2. The process as claimed in claim 1, wherein component a1) is reacted simultaneously with components a2) to a4).

3. The process as claimed in claim 1, wherein the Mg:Ti:M:Al ratio in the preparation of catalyst component a is 1 : 0.05 to 1 : 0.05 to 1 : 0.3 to 2.

4. The process as claimed in claim 1, wherein the chlorine-containing titanium(III) compound a1 is titanium trichloride.

## Revendications

1. Procédé pour préparer un polymère de l'éthylène ayant une granulométrie grossière uniforme et une grande masse volumique apparente, par polymérisation d'éthylène, ou d'éthylène contenant jusqu'à 10 % en poids, par rapport à la quantité totale des monomères, d'une 1-oléfine de formule R⁹-CH=CH₂ dans laquelle R⁹ est un groupe alkyle à chaîne droite ou ramifiée ayant de 1 à 12 atomes de carbone, en suspension, en solution ou en phase gazeuse, à une température de 20 à 120°C et sous une pression de 2 à 60 bar, en présence d'un catalyseur constitué d'un constituant a contenant un métal de transition, et d'un constituant b organique de l'aluminium, caractérisé en ce que la polymérisation est mise en oeuvre en présence d'un catalyseur, qui est constitué
a) du produit total de la réaction
a1) d'un composé du titane(III) contenant du chlore avec
a2) un alcoolate de magnésium, dissous dans un solvant inerte, choisi dans le groupe comprenant le butane, le pentane, l'hexane, l'heptane, l'isooctane et l'essence ayant une plage d'ébullition de 140 à 170°C, et leurs mélanges, de formule I
Mg(OR¹)(OR²) (I)
dans laquelle R¹ et R² sont identiques et représentent chacun un radical -CH₂-CHR⁶R⁷ ou -(CH₂)ₙOR⁸, où R⁶ est un atome d'hydrogène ou un groupe alkyle en C₁-C₆, R⁷ est un groupe alkyle en C₃-C₅, R⁸ est un groupe alkyle en C₁-C₄ et n est un nombre entier de 2 à 6, ou bien R¹ et R² sont différents, R¹ a les significations données ci-dessus et R² est un groupe alkyle en C₁-C₂₀, et avec
a3) un composé d'un métal de transition tétravalent de formule II
MXₘ(OR³)₄₋ₘ (II)
MXₘ(OR³)₄₋ₘ (II) dans laquelle M est le titane, le zirconium ou le hafnium, R³ est un groupe alkyle en C₁-C₉ et X est un atome d'halogène, et m est un nombre entier de zéro à 4, et avec
a4) un composé organique de l'aluminium de formule III
AlR_{q} ⁴(OR⁵)ₚX_{3-q-p} (III)
dans laquelle R⁴ et R⁵ sont identiques ou différents et représentent chacun un groupe alkyle en C₁-C₆, X est un atome d'halogène, q est un entier de zéro à 3 et p est un nombre de zéro à 1, selon un rapport Mg:Ti:M:Al tel que 1:0,05 à 2:0,05 à 2:0,3 à 4, où la réaction du constituant a1 s'effectue simultanément avec les constituants a2 ou a4, ou bien on fait d'abord réagir simultanément a1 avec a2 et a3, puis on procède à la réaction avec a4, ou encore le constituant a1 est mis à réagir successivement avec les constituants a2 à a4, et
b) d'un trialkylaluminium ayant de 1 à 6 atomes de carbone dans les groupes alkyle, ou du produit de la réaction d'un trialkylaluminium ou d'un hydrure de trialkylaluminium avec de l'isoprène.

2. Procédé selon la revendication 1, caractérisé en ce que le constituant a1) est mis à réagir simultanément avec les constituants a2) à a4).

3. Procédé selon la revendication 1, caractérisé en ce que, lors de la préparation du constituant catalyseur a, la proportion Mg:Ti:M:Al est 1:0,05 à 1:0,05 à 1:0,3 à 2.

4. Procédé selon la revendication 1, caractérisé en ce que le composé chloré du titane(III) a1 est le trichlorure de titane.
